(19) Europäisches Patentamt
European Patent Office
Office européen des brevets

(11) Numéro de publication: **0 010 473 B1**

# (12) FASCICULE DE BREVET EUROPEEN

(45) Date de publication du fascicule du brevet: **01.12.82**

(51) Int. Cl.³: **C 02 F 3/04**, C 02 F 3/10

(21) Numéro de dépôt: **79400700.5**

(22) Date de dépôt: **03.10.79**

(54) **Procédé d'épuration des eaux.**

(30) Priorité: **25.10.78 FR 7830282**
**04.04.79 FR 7908434**

(43) Date de publication de la demande: **30.04.80 Bulletin 80/9**

(45) Mention de la délivrance du brevet: **01.12.82 Bulletin 82/48**

(84) Etats contractants désignés: **BE CH DE GB IT SE**

(56) Documents cités:
**DE-A-2 530 722**
**FR-A-333 406**
**FR-A-396 710**
**FR-A-2 105 006**
**FR-A-2 109 970**
**FR-A-2 148 601**
**FR-A-2 358 362**
**FR-A-2 372 777**
**GB-A-1 415 437**
**US-A-3 730 881**

**JOURNAL OF WATER POLLUTION CONTROL FEDERATION, vol. 49, no. 6, 1977, Washington, D.C., USA, S.Z. KLEMETSON: «Biological filters», pages 1001–1005**

**JOURNAL OF WATER POLLUTION CONTROL FEDERATION, vol. 40, no. 11, partie 2, 1968, Washington, D.C., USA, B.H. KORNEGAY et al.: «Kinetics of fixed-film biological reactors», pages R460–R468**

**«MEMENTO TECHNIQUE DE L'EAU» Degrémont (1966) pp. 121 et suivantes (pp. 130–137)**

**«Backwash of granular filters used in waste waterfiltration» E.P.A.600/2.77.06 (1977) avril. pp. 68–76**

**«Physical-chemical treatment of municipal waste water using powdered carbon». no. II E.P.A.600/2.76.235 (1976) novembre pp. 20–22**

**«Technique et contrôle du traitement des eaux» Charles R. Cox – O.M.S. (1967) pp. 106–130**

(73) Titulaire: **OMNIUM D'ASSAINISSEMENT, Le Doublon 11 Avenue Dubonnet, F-92407 Courbevoie Cedex (FR)**

(72) Inventeur: **Moreaud, Henri, 3 Square de Tocqueville, F-78150 Le Chesnay (FR)**
Inventeur: **Gilles, Pierre, 1 rue du Maréchal Foch, F-93270 Sevran (FR)**
Inventeur: **Leglise, Jean-Paul, 36, chemin de l'Avenir, F-78360 Montesson (FR)**

(74) Mandataire: **Cuer, André, CABINET CUER 30, rue de Léningrad, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).



ACTORUM AG

# Procédé d'épuration des eaux.

La présente invention a trait au domaine de l'épuration, notamment par voie biologique, des eaux de toute nature telles que: eaux industrielles, eaux d'égouts ou eaux de distribution à rendre potables.

L'épuration des eaux, qu'elles soient superficielles ou résiduaires, a fait l'objet de nombreuses études qui ont conduit à une mise au point de procédés que l'on peut regrouper sommairement de la manière suivante:

a) les procédés de coagulation-floculation-décantation-filtration sur sable (en surface);

b) les procédés de filtration purement mécanique également, mais dans la masse;

c) les procédés de filtration dite biologique, faisant appel simultanément à l'action de microorganismes assurant la dégradation des impuretés organiques contenues dans l'eau;

d) les procédés d'adsorption sur charbon actif, après floculation-décantation et éventuellement filtration sur sable;

e) les traitements par boues activées;

f) les traitements par lits bactériens.

On peut dire que chacune de ces techniques présente ses propres avantages et inconvénients, sans qu'aucune ne soit totalement satisfaisante, de sorte que l'on est souvent obligé de les combiner et de mettre ainsi en œuvre des chaines de traitement complexes et coûteuses.

Sans entrer dans les détails des opérations successives à faire subir à une eau pour la traiter, on peut dire globalement que la plupart de ces procédés nécessitent l'utilisation d'équipements assez volumineux disposés en série, de sorte que la durée totale du traitement peut atteindre plusieurs heures.

Pour surmonter ces inconvénients, on a proposé, dans le brevet français publié No. 2 358 362, un procédé de type c) pour l'élimination de la pollution par voie biologique dans un lit de charbon, selon lequel on injecte au sein de ce lit un gaz contenant de l'oxygène dans le but de fournir aux microorganismes qui se développent dans ce lit l'oxygène qui leur est nécessaire. Ainsi, grâce à la combinaison d'une filtration en profondeur et de la mise en œuvre de charbon actif constamment aéré, on réalise en quelques minutes un traitement plus complet et en un seul ouvrage compact.

Dans le procédé objet du brevet français précité, des limitations on été introduites pour des paramètres tels que par exemple le temps de contact de l'eau à traiter avec le charbon actif et la vitesse linéaire de l'eau à travers le lit. Il a en effet été précisé que cette vitesse ne devait pas dépasser 2 m/heure afin de conserver intact le «tissu connectif» formé par les colonies de bactéries qui se développent entre les particules de charbon et contribuent ainsi à l'épuration de l'eau tout en retenant les particules en suspension dans cette eau.

En fait, si l'un des facteurs qui sont à l'origine de l'efficacité du traitement est bien l'existence de microorganismes fixés sur le charbon, la Demanderesse est partie d'une nouvelle idée et, après une série d'essais, a pu montrer que la vitesse linéaire de l'eau n'avait pas un rôle déterminant sur les risques de rupture du tissu connectif et que d'autres facteurs entraient largement en ligne de compte, tout particulièrement le débit du gaz oxygéné qui, à partir d'un certain taux, entraîne une érosion du tissu connectif.

Des études et recherches systématiques ont alors été effectuées par la Demanderesse afin de pouvoir déterminer, suivant cette nouvelle idée, une loi générale permettant une application du procédé à tout type d'eau polluée en vue d'obtenir un taux prédéterminé et désiré d'épuration.

Pour déterminer la loi correspondant à cette idée, il a fallu rechercher d'une part les relations entre le débit de l'eau à traiter et le débit de gaz oxygéné insufflé dans le lit de charbon actif et, d'autre part, l'influence sur ces débits de divers paramètres tels que: la nature et la constitution du lit, la quantité de pollution qu'il est possible d'éliminer par m³ de charbon et par heure.

Avant de préciser la portée de l'invention et les améliorations technologiques qui en découlent dans un tel procédé de base d'épuration sur lit fixe de charbon actif, on résumera tout d'abord ci-dessous les principaux résultats des études effectuées sur les interactions des paramètres principaux et secondaires influençant le procédé.

Des essais ont tout d'abord montré que, pour des débits d'eau atteignant jusqu'à 10 m³ d'eau par heure et par m² de section de lit de matériau granulaire, il était possible de définir un paramètre alpha correspondant au taux maximum des interstices du lit occupés par le gaz oxygéné sans compromettre le fonctionnement de ce lit, ceci pour la durée d'un cycle défini par l'intervalle entre deux lavages successifs du lit à contrecourant. Compte-tenu de la vitesse de déplacement du gaz dans le lit, on a pu établir que le débit de gaz oxygéné devait satisfaire à la relation suivante:

$$\frac{Q_1}{S} \leq (\alpha\varepsilon - K_1)\, v \qquad (1)$$

dans laquelle: $Q_1$ est le débit de gaz oxygéné en m³/h; $\varepsilon$ est la porosité du lit, c'est-à-dire le volume disponible hors du charbon; $\alpha$ est la fraction maximum du volume précédent qui peut être occupée par le gaz sans affecter l'efficacité du traitement; S est la section du lit en m²; v représente la composante verticale de la vitesse moyenne des bulles de gaz ascendantes dans le lit, en m/h; et: $K_1$ est une constante correspondant à la fraction de volume de lit occupée par des poches de gaz immobilisées.

Pour trouver la relation liant le débit de gaz oxygéné au débit d'eau à traiter, il faut exprimer que le débit de gaz injecté doit procurer au lit

granulaire la quantité d'oxygène dissous strictement nécessaire à l'épuration biologique. Si l'on indique par DO la demande en oxygène à satisfaire en kilogramme par mètre cube d'eau à traiter, on a pu établir la relation:

$$\frac{Q_2 \cdot DO}{R \cdot K_2} \leq Q_1 \qquad (2)$$

dans laquelle: $Q_2$ est le débit d'eau à traiter en $m^3/h$; R est le rendement global de transfert c'est-à-dire la fraction: kilogs d'oxygène effectivement dissous/kilogs d'oxygène injectés dans le lit; et $K_2$ représente la concentration du gaz en oxygène, exprimée en $kg/m^3$.

En remplaçant $Q_1$ dans l'équation (2) par sa valeur tirée de la relation (1) on obtient la relation rapportée uniquement au débit d'eau, à savoir:

$$\frac{Q_2}{S} \leq \frac{K_2 R}{DO} v(\alpha\varepsilon - K_1) \qquad (3)$$

En fait, pour une utilisation optimum du procédé, on doit maintenir ce débit d'eau $Q_2$ à une valeur au plus égale à l'aptitude du lit à satisfaire biologiquement la demande en oxygène DO, la condition pouvant alors s'écrire:

$$\frac{Q_2 \cdot DO}{s.h.} \leq K_3$$

où: h est la hauteur du lit de matériau granulaire en mètres

$K_3$ représente la capacité du lit à éliminer biologiquement la DO (ou valeur de DO que peut satisfaire 1 $m^3$ de matériau granulaire en 1 h).

En pratique, comme on le verra plus loin, l'efficacité du procédé est maintenue à son taux optimum en disposant dans l'eau à traiter une sonde de mesure de l'oxygène dissous qui commande en permanence l'alimentation du gaz oxygéné de manière à fournir à chaque instant la quantité d'oxygène strictement nécessaire et suffisante.

Selon sa définition la plus générale, le procédé d'épuration des eaux selon l'invention consiste donc, dans la technique connue de percolation de l'eau à travers un lit fixe de matériau granulaire aéré à un niveau intermédiaire, à ajuster les débits d'eau à traiter et de gaz oxygéné à injecter de façon telle que l'on respecte les relations suivantes:

$$\frac{Q_1}{S} \leq (\alpha\varepsilon - K_1)v \qquad (1)$$

$$\frac{Q_2}{S} \leq \frac{K_2 \cdot R_v}{DO} (\alpha\varepsilon - K_1) \qquad (3)$$

et simultanément:

$$\frac{Q_2 \cdot DO}{S.h} \leq K_3 \text{ ou: } \frac{Q_2}{S} \leq \frac{K_3 \cdot h}{DO} \qquad (4)$$

chacun des paramètres précités ayant les définitions telles que données ci-dessus.

Comme on le verra dans la description relative aux exemples de réalisation et conformément aux relations précitées, les réglages relatifs des débits $Q_1$ et $Q_2$ sont effectués en agissant sur l'un ou l'autre des paramètres d'influence. Par exemple, si l'augmentation du débit d'eau à traiter conduit à accroître le débit de gaz oxygéné au-delà de la valeur limite pour l'objectif souhaité, on peut alors: soit agir sur la concentration en oxygène du gaz; soit utiliser des hauteurs de lit mieux adaptées au produit à traiter, eu égard au coefficient R; soit encore adopter des systèmes de diffusion du gaz oxygéné à différents niveaux dans le lit granulaire, ce qui permet d'ailleurs de réduire l'agitation des zones du lit situées en dessous du niveau d'introduction le plus élevé du gaz.

Les divers paramètres inclus dans les relations (1), (3) et (4) sont évidemment fonction du type d'eau à traiter et peuvent varier chacun entre des limites plus ou moins larges. Toutefois, dans les conditions les plus générales et les plus courantes d'épuration des eaux selon le procédé de l'invention, on adopte les valeurs numériques exprimées de la façon suivante:

ε, qui est fonction de la forme des grains et de leur arrangement dans le lit, est de préférence compris entre 0,45 et 0,55, par exemple voisin de 0,50 pour le charbon actif mis en œuvre;

$K_1$ varie de 0,02 à 0,08 $m^3$ de volume de lit occupé par les poches de gaz immobilisées par $m^3$ de lit total, par exemple voisin de 0,04 $m^3/m^3$;

$K_2$ est de préférence compris entre 0,20 et 1,40 $kg/m^3$.

alpha est maintenu entre 0,2 et 0,6, avantageusement entre 0,35 et 0,45.

v, dans les conditions habituelles de fonctionnement (pour une température, une vitesse de l'eau, une granulométrie et une forme de matériau granulaire données), est compris entre 200 et 400 m/h, souvent voisin de 300 m/h;

pour une teneur en oxygène donnée $K_2$ du gaz d'aération, le rendement R est fonction de la concentration de saturation ($C_S$) et de la concentration réelle (C) atteinte au sein du lit, selon la formule:

$$R = K (C_S - C)$$

où K est une constante de proportionalité tenant compte de paramètres tels que: salinité, température, conditions d'agitation et hauteur du lit. Par exemple, dans le cas où le gaz insufflé est de l'air et pour un lit de hauteur comprise entre 1 et 3 mètres, les valeurs du K sont généralement comprises entre:

$$2{,}7 \cdot 10^{-3} < K < 25.10^{-3} \text{ (mg/l)}^{-1}$$

$K_3$: cette valeur expérimentale est généralement inférieure à 0,8 kg de $O_2$ par heure et par $m^3$ de matériau granulaire; elle est d'autant plus élevée que la concentration en oxygène dissous est maintenue plus forte.

La demande en oxygène DO est fonction des caractéristiques de consommation d'oxygène et du degré d'épuration recherché. En dehors de la demande chimique immédiate en oxygène, sa détermination tient compte de l'élimination de la DBO (demande biologique en oxygène) de la DCO (demande chimique en oxygène) et des phénomènes de nitrification éventuelle de l'eau. Lorsque le traitement vise uniquement l'élimination de la DBO, DO est généralement calculé selon la relation:

$$0{,}7 \leq \frac{DO}{DBO_5} \leq 1{,}2 \qquad (5)$$

Bien entendu, la DO totale correspondant à l'élimination des pollutions carbonées et azotées, s'écrit selon la formule générale:

$DO = (0{,}7 \text{ à } 1{,}2)\ DBO_5 + (4 \text{ à } 5)\ N\ (\text{de } NH_4)$.

A titre illustratif et indépendamment des exemples de réalisation qui apparaîtront plus loin dans la description, on peut indiquer ci-dessous un mode d'application des relations mathématiques précitées définissant le procédé de l'invention.

On admet que l'on a à traiter une eau résiduaire urbaine ($K_3 = 0{,}31$) par percolation sur un lit de charbon actif de 2 mètres de hauteur avec insufflation d'air atmosphérique à environ 30 cm du niveau inférieur de la couche de charbon. La DBO à l'entrée est de 180 mg/l et l'on désire amener celle-ci à la valeur de 30 mg/l. La différence de DBO à l'entrée et à la sortie doit donc être:

$\Delta DBO = 150$. En adoptant pour la demande en oxygène DO le deuxième terme de la relation (5), on a: $DO = 1{,}2 \times \Delta DBO = 0{,}180$ kg de $O_2/m^3$.

La première condition à satisfaire, liée à la capacité de traitement du charbon actif s'écrira selon la relation (4):

$$\frac{Q_2}{S} \leq \frac{K_3 h}{DO} = \frac{0{,}31 \times 2}{0{,}180} = 3{,}50\ m^3/m^2/h$$

Selon la deuxième condition, on doit vérifier que tout l'oxygène nécessaire au traitement peut être transféré dans le lit, ce qui s'exprime par la relation (3) à savoir:

$$\frac{Q_2}{S} \leq \frac{K_2 R_v}{DO} (\alpha\varepsilon - K_4)$$

Compte-tenu de la teneur en $O_2$ de l'air dans les conditions normales, on sait que $K_2 = 0{,}28$ kg $O_2/m^3$ d'air. Par ailleurs, par l'expérimentation et les mesures on peut déterminer les valeurs suivantes des autres paramètres: $R = 0{,}05$; $v = 300$ m/h: alpha $= 0{,}4$; $\varepsilon = 0{,}5$; $K_2 = 0{,}04$. En appliquant l'inéquation (3) on obtient donc:

$$\frac{Q_2}{S} \leq \frac{0{,}28 \times 0{,}05}{0{,}180} \times 300 \times 0{,}16 = 3{,}73\ m^3/m^2/h$$

Pour satisfaire aux deux conditions précitées selon le procédé de l'invention on est donc amené à choisir le plus faible des deux débits calculés, à savoir 3,50 $m^3/m^2/h$ qui représente la quantité d'air strictement à injecter dans le lit de charbon actif. Comme on le verra ci-après, il sera judicieux, dans un tel cas, d'ajouter sous le lit de charbon actif une couche supplémentaire filtrante de sable ou analogue.

En pratique, le procédé de l'invention de percolation de l'eau sur un lit fixe aéré de matériau granulaire peut être mis en œuvre de diverses façons, caractérisées chacune par leur propre technologie.

Selon un premier mode de réalisation, on utilise comme matériau granulaire uniquement du charbon actif comme dans le procédé du brevet français précité mais en faisant varier les débits d'eau à traiter et de gaz oxygéné, comme par exemple de l'air, dans les relations mathématiques (1), (3) et (4), de manière à sortir des conditions considérées comme critiques dans le brevet précité notamment quant à la vitesse de prercolation de l'eau et aux temps de contact de celle-ci avec le lit de charbon actif. Les deux actions favorables connues dans le procédé de ce brevet, à savoir l'épuration biologique oxydative dans la zone supérieure et la filtration mécanique dans la zone inférieure, sont sensiblement renforcées par le perfectionnement du procédé de l'invention du fait de la prolongation de période d'activité du charbon entre deux régénérations par rapport à son utilisation comme adsorbant simple et, par ailleurs, de la possibilité d'accroître de façon importante la vitesse de passage de l'eau à travers le filtre, laquelle peut atteindre 6 à 10 mètres par heure, tout en bénéficiant de la totalité des avantages du procédé.

Conformément à un autre mode de réalisation, on utilise comme matériau filtrant la combinaison d'une couche de charbon actif et, disposée sous celle-ci, d'une couche d'un matériau de granulométrie inférieure et de densité plus élevée, comme par exemple du sable. En effet, lorsque le débit de gaz $Q_1$ dépasse une certaine valeur, il peut se produire un décrochement du lit puis un entraînement d'une partie des particules de pollution fixées sur le charbon. Grâce à l'introduction d'une couche sous-jacente de sable fin, ou analogue, on pallie à l'inconvénient précité. Une telle réalisation est particulièrement intéressante dans le cas du traitement d'une eau de surface (non prévu dans le brevet antérieur précité) car l'on obtient ainsi en une seule étape, avec adjonction éventuelle d'une faible quantité de réactif floculant, une eau potable correspondant aux normes usuelles. On sait que dans les techniques connues le traitement d'une eau brute de surface chargée de pollution exige de nombreuses étapes opératoires dont: coagulation-floculation, décantation, filtration sur le charbon actif...

Selon une variante de ce mode de réalisation, il peut être également avantageux pour améliorer la durée de vie des lits, d'intercaler entre le lit de charbon actif et le lit de sable une couche d'un troisième matériau granulaire d'une densité comprise entre celle du charbon actif et du sable, par exemple de l'anthracite. Cette couche intercalaire, d'une épaisseur variable selon les cas, a pour rôle de protéger le lit de charbon actif contre l'effet abrasif des grains de sable pendant la filtration ou le lavage.

Il convient de noter que, grâce au procédé selon l'invention, en particulier avec des multicouches

de matériaux granulaires, les lavages deviennent beaucoup moins fréquents, et peuvent souvent être portés de quotidiens à hebdomadaires.

En réalité, tout autre matériau granulaire que le charbon actif peut être mis en œuvre pour constituer le lit fixe pourvu qu'il présente: une bonne résistance mécanique de façon à ne pas entraîner d'abrasion lors du cycle de lavage du lit; une granulométrie convenable, généralement comprise entre 1 et 8 mm; et l'aptitude à fixer l'un au moins des éléments nécessaires aux réactions bio-chimiques: bactéries (ou enzymes), pollutions carbonées ou ammoniacales, oxygène.

Parmi ces autres matériaux granulaires, on peut citer à titre non limitatif: des argiles cuites ou chamottes, dopées ou non par des oligo-éléments servant de nutriments pour les microorganismes; certaines argiles crues des types: illitique, kaolinique ou montmorillonitique; des silicates hydratés comme des pouzzolanes; des alumines activées ou produits équivalents.

Le gaz oxygéné utilisé pour l'injection en un point du lit, peut être constitué par de l'air ou tout autre fluide gazeux oxygéné. Selon une réalisation intéressante, on peut à cet effet utiliser de l'oxygène, de l'air contenant de l'oxygène ou un mélange gazeux ozonisé, provenant par exemple du recyclage de l'atmosphère riche en ozone surplombant une eau désinfectée par l'ozone. Il est d'ailleurs conseillé, dans le cas du traitement d'une eau de surface en vue de la rendre potable, de soumettre celle-ci à une oxydation préalable par l'ozone. On réalise, grâce à la récupération de cette ozone pour l'injection dans le lit, suivant l'invention, une économie et une activation du processus biologique. On a en effet constaté que le traitement préalable à l'ozone ou l'emploi d'air ozonisé donne lieu à des effets synergétiques dans le procédé selon l'invention, en raison notamment du fait que l'ozone modifie les molécules organiques contenues dans l'eau en les rendant plus accessibles à une bio-dégradation ultérieure.

Dans le cas d'eau contenant des particules à activité très colmatrice, telles que des algues, ces algues traversent aisément la couche de charbon à granulométrie élevée et viennent rapidement colmater la zone supérieure du lit de sable. Il est donc avantageux de soumettre cette zone supérieure à une agitation pour augmenter la durée de vie de la couche de sable.

D'autres avantages de l'invention apparaîtront mieux dans les exemples illustratifs suivants qui ont trait au traitement soit d'eaux industrielles ou résiduaires soit d'eaux de surface en vue de les potabiliser.

## EXEMPLES

### A. Eaux résiduaires

On a traité dans des conditions conformes au procédé de l'invention diverses eaux résiduaires dans des installations pilote et semi-industrielles, en déterminant la valeur des principaux paramètres caractéristiques tels que définis dans les formules (1), (3) ou (4) précitées.

Les résultats d'ensemble sont consignés dans le tableau 1 ci-après étant précisé que:

pour l'exemple 1, il s'agissait du traitement d'une eau urbaine faiblement chargée en matières organiques et en azote oxydable. Le gaz oxygéné était constitué par de l'air avec un débit de 14 m$^3$/h;

pour l'exemple 2, l'eau à traiter était une eau urbaine classique où il fallait éliminer uniquement la pollution hydrocarbonée. On a utilisé de l'air à un débit de 28 m$^3$/h;

dans l'exemple 3, on est parti d'une eau du même type que pour l'exemple 2, mais en poussant le traitement jusqu'à la nitrification, la demande en oxygène (DO) étant alors égale, dans le tableau 1, à la somme des demandes biochimiques en oxygène et en azote oxydé. Le gaz oxygéné injecté était de l'air, au débit de 21 m$^3$/h;

dans l'exemple 4, on a traité un mélange d'eau urbaine et d'eau industrielle exigeant une forte demande en oxygène. On a utilisé de ce fait un gaz enrichi en oxygène contenant 600 g de $O_2$ par m$^3$ avec un débit de 8,33 m$^3$/h et recyclage du gaz;

dans l'exemple 5, il s'agissait d'une eau industrielle que l'on a traitée avec un gaz oxygéné du même type que pour l'exemple 4 (à 600 g de $O_2$/m$^3$) sous un débit de 8,33 m$^3$/h, avec recyclage.

Pour tous ces essais, on a mis en œuvre un lit de charbon actif de granulométrie: 1,5 à 4 mm et hauteur: 2 mètres, pour lequel on avait: $\varepsilon = 0{,}5$ et $\alpha = 0{,}4$ (valeur pour laquelle les cycles restaient supérieurs à 24 heures).

L'injection de gaz oxygéné était faite à un niveau intermédiaire du lit de charbon actif.

Enfin les différents paramètres de la colonne 1 du tableau sont exprimés dans les unités précisées au cours de la description qui précède (C et $C_S$ exprimés en mg/l).

Tableau 1

| Paramètres d'influence | Exemples N° 1 | N° 2 | N° 3 | N° 4 | N° 5 |
|---|---|---|---|---|---|
| DO | 0,084 | 0,195 | 0,324 | 0,352 | 1,45 |
| CS–C | 5 | 7,5 | 6 | 15 | 15 |
| K (× 10$^{-3}$) | 7 | 4,8 | 5,6 | 6,9 | 6,9 |
| $K_1$ | 0,04 | 0,04 | 0,04 | 0,04 | 0,04 |
| $K_2$ | 0,28 | 0,28 | 0,28 | 0,60 | 0,60 |
| $K_3$ | 0,137 | 0,275 | 0,208 | 0,45 | 0,45 |
| h | 2 | 2 | 2 | 2 | 2 |
| R (obtenu) | 0,07 | 0,072 | 0,067 | 0,18 | 0,18 |
| $Q_{2/S} (= \frac{K_{3h}}{DO})$ | 3,26 | 2,82 | 1,28 | 2,55 | 0,62 |

Les mesures ont montré que la vitesse ascensionnelle des bulles (paramètre v) était de l'ordre de 300 m/h. Dans ces conditions, avec $\alpha = 0,4$, on obtenait une valeur limite de $Q_1/S$ selon la relation (1) égale à (ou voisine de) 48 m/h, valeur non atteinte avec les eaux traités selon l'invention conformément aux exemples du tableau.

Grâce à l'invention on a pu effectuer, avec de bons résultats, un traitement d'épuration en une seule étape. Ce traitement aurait normalement exigé la mise en œuvre de deux installations successives de volumes plusieurs fois supérieurs pour effectuer: une étape de traitement biologique par boues activées puis une étape de clarification secondaire.

B. Production d'eau potable à partir d'eau de surface.

On a effectué des séries d'essais de traitement d'eaux de surface en vue de les rendre potables, sur une eau extraite de la Seine en aval de Paris. Les essais ont été entrepris en faisant circuler l'eau de haut en bas dans une colonne de 50 cm de diamètre contenant un lit supérieur de charbon actif de granulométrie 2,4 à 4,8 mm sur une hauteur totale de 1,2 mètre. Dans certains essais, on a ajouté sous le lit de charbon actif une couche filtrante de sable de granulométrie 0,8 à 1,2 mm selon une hauteur de 0,4 mètre environ. Les lits étaient submergés avec une hauteur de liquide d'environ 30 cm au-dessus du lit de charbon actif. Pendant la percolation, effectuée à des vitesses linéaires de l'eau variant entre 4 m/h et 6 m/h et correspondant à des temps de contact de 15 à 30 minutes entre l'eau et le lit granulaire, on a injecté en continu de l'air dans la colonne à un débit d'environ 3 $m^3/m^2/h$, ceci en différents points selon les essais, à savoir: soit à environ 20 cm de la base du lit de charbon actif dans le cas où seul ce matériau granulaire a été utilisé soit à l'interface charbon-sable dans le cas de mise en œuvre d'un lit multicouches.

Les résultats des essais sont résumés dans le tableau 2 ci-après où l'on introduit, à titre de comparaison, des essais de percolation d'eau brute sur un filtre constitué non pas par du charbon actif mais par une argile cuite (ou chamotte).

Tableau 2

| Type de traitement | Turbidité | Ammoniaque (mg/l) | Oxygène consommé par mat. organiques (mg/l de $O_2$) | Couleur (degrés Hazen) |
|---|---|---|---|---|
| Eau brute non traitée | 40 | 3 | 4,5 | 20 |
| Eau traitée sur matériau non absorbant (argile cuite) avec conditions de l'invention | 8,3 | 1,5 | 3,5 | 15 |
| Eau traitée selon l'invention; 1 couche de charbon actif | 2 | 0 | 2,3 | 10 |
| Eau traitée selon l'invention; 1 couche charbon actif + 1 couche de sable | 0,8 | 0 | 2 | 10 |
| Eau traitée selon l'invention; 1 couche charbon actif + 1 couche sable; avec ozonisation préalable de l'eau (2 mg/l $O_3$) | 0,15 | 0 | 1,5 | 3 |

Il convient de faire remarquer que, pour obtenir les excellents résultats inscrits sur les deux dernières lignes horizontales, il faudrait mettre en œuvre, dans un traitement classique, les séries d'étapes successives suivantes: pré-oxydation au chlore de l'eau, floculation, décantation, filtration sur sable, filtration sur adsorbant actif, ozonisation, chloration finale, ceci en mettant en œuvre au moins: 25 à 30 mg/l de chlore, 50 à 60 mg/l de floculant (sulfate d'alumine par exemple) et 0,3 à 0,5 mg/l d'un adjuvant de floculation.

L'invention a donc permis en une seule étape d'obtenir une eau satisfaisant aux normes de potabilité, sans utilisation (ou éventuellement un minimum très faible) de réactifs chimiques. Il a en outre été constaté un certain nombre d'autres avantages dont, en particulier: la possibilité d'utiliser pendant plusieurs mois la même charge de matériau actif granulaire, avec des lavages espacés sur une semaine seulement au lieu de 1 à 2 jours comme dans la filtration classique; une nette économie en eau de lavage à savoir 0,3% environ de l'eau propre produite, au lieu de 5% habituellement dans les procédés conventionnels; la réduction notable des boues produites et leur plus grande facilité de traitement ultérieur du fait que celles-ci sont moins riches en hydroxyde d'aluminium (provenant de l'addition de sel d'aluminium comme floculant dans les procédés classiques).

Des essais d'épuration d'eaux résiduaires et de production d'eau potable, effectués en substituant au lit de charbon actif des lits de hauteur convenable constitués par des chamottes (argiles cuites), argiles crues (par exemple kaolinique et illitique) et des alumines activées, ont permis d'obtenir des résultats sensiblement équivalents.

**Revendications**

1. Procédé d'épuration d'une eau polluée du type selon lequel on fait percoler de haut en bas l'eau à traiter à travers un lit submergé et fixe de matériau filtrant granulaire avec insufflation à un niveau intermédiaire du lit d'un courant gazeux

oxygéné ascendant, le procédé étant caractérisé en ce que l'on règle les débits d'eau à traiter et de gaz oxygéné de façon telle que l'on satisfasse aux relations suivantes:

$$\frac{Q_1}{S} \leq (\alpha\varepsilon - K_1)v \quad (1)$$

$$\frac{Q_2}{S} \leq \frac{K_2 \cdot R}{DO} v\,(\alpha\varepsilon - K_1) \quad (3)$$

et simultanment

$$\frac{Q_2 \cdot DO}{S.h} \leq K_3 \text{ ou } \frac{Q_2}{S} \leq \frac{K_3 \cdot h}{DO} \quad (4)$$

dans lesquelles:

– $Q_1$ est le débit du gaz oxygéné, en $m^3/h$

– $Q_2$, le débit de l'eau à traiter, inférieur à 10 $m^3/h/m^2$ de section du lit

– $\varepsilon$ la porosité du lit de matériau granulaire, de préférence compris entre 0,45 et 0,55

– $\alpha$: la fraction maximum du volume de pores que peut occuper le gaz sans affecter l'efficacité du traitement; $\alpha$ variant entre 0,2 et 0,6

– S, la section du lit en $m^2$

– h, la hauteur du lit en mètre

– v, la composante verticale de la vitesse moyenne des bulles de gaz ascendantes, comprise entre 200 et 400 m/h

– $K_1$ une constante, comprise entre 0,02 et 0,08 $m^3/m^3$, correspondant à la fraction de volume de lit occupé par des poches de gaz immobilisées

– $K_2$, la concentration du gaz en oxygène, comprise de préférence entre 0,20 et 1,40 $kg/m^3$

– $K_3$ la valeur de la demande en oxygène (DO) qui peut satisfaire 1 $m^3$ de matériau granulaire en 1 heure dans les conditions de fonctionnement du procédé (en $kg/m^3/h$), $K_3$ étant inférieur à 0,8 kg de $O_2/h/m^3$ de matériau granulaire

– DO, la demande en oxygène à satisfaire, en kg par mètre cube d'eau à traiter et correspondant à la relation: DO totale = (0,7 à 1,2) $DBO_5$ + (4 à 5) N (de $NH_4$)

– R, le rendement global de transfert (ou fraction: poids d'oxygène effectivement dissous/poids d'oxygène injecté dans le lit), ce rendement étant fonction des concentrations de saturation $C_S$ et réelle C en oxygène dans le lit, conformément à la relation:

$R = K\,(C_S - C)$ où K est compris entre $2{,}7 \cdot 10^{-3}$ et $25 \cdot 10^{-3}\ (mg/l)^{-1}$.

2. Procédé selon la revendication 1, caractérisé en ce que le matériau granulaire est constitué par du charbon actif, l'injection de gaz oxygéné étant faite dans la zone inférieure du lit de charbon actif.

3. Procédé selon la revendication 1, caractérisé en ce que le matériau granulaire est constitué par un double lit renfermant en partie supérieure des grains de charbon actif, et, en partie inférieure, un matériau plus fin et plus dense de type sable ou analogue.

4. Procédé selon la revendication 3, caractérisé en ce que l'on intercale entre la couche de charbon actif et celle de sable un matériau de densité intermédiaire, tel que de l'anthracite ou analogue.

5. Procédé selon l'une quelconque des revendications 2 à 4, caractérisé en ce que le charbon actif est remplacé par un matériau granulaire choisi dans le groupe des: argiles cuites (chamottes), chamottes dopées par des oligoéléments, argiles crues, silicates hydratés, alumines activées.

6. Procédé selon l'une quelconque des revendications 1 à 5, caractérisé en ce que le gaz oxygéné est choisi dans le groupe constitué par: l'air, l'oxygène pur, un mélange gazeux ozonisé provenant du recyclage de l'atmosphère, riche en ozone, surplombant une eau désinfectée au préalable par l'ozone.

7. Procédé selon la revendication 6, caractérisé en ce que l'alimentation en gaz oxygéné servant à l'injection dans le lit de matériau(x) pulvérulent(s) est commandée et régulée par une sonde de mesure de l'oxygène dissous, disposée dans l'eau à traiter.

8. Procédé selon l'une quelconque des revendications 1 à 7, caractérisé en ce que l'eau à épurer est soumise au préalable à un traitement d'ozonisation.

9. Application du procédé selon l'une quelconque des revendications 1 à 8 au traitement d'eaux de surface ou de nappes en vue de les rendre potables et au traitement d'eaux résiduaires telles que eaux d'égouts ou industrielles.

**Claims**

1. Process of purification of polluted water of a type in which the water to be treated is made to percolate from above to below through a submerged and fixed bed of granular filtering material with the insufflation at an intermediate level of the bed of an oxygenated gaseous flow rising, the process being characterized in that the flows of water to be treated and the oxygenated gas are regulated so as to satisfy the following relations:

$$\frac{Q_1}{S} \leq (\alpha\varepsilon - K_1) \quad (1)$$

$$\frac{Q_2}{S} \leq \frac{K_2 \cdot R}{DO} v\,(\alpha\varepsilon - K_1) \quad (3)$$

and, simultaneously:

$$\frac{Q_2 \cdot DO}{S.h} \leq K_3 \text{ or } \frac{Q_2}{S} \leq \frac{K_3 \cdot h}{DO} \quad (4)$$

in which:

– $Q_1$ is the oxygenated gas flow, in $m^3/h$

– $Q_2$ the flow of water to be treated, lower than 10 $m^3/h/m^2$ of bed section

– $\varepsilon$ the porosity of the bed of granular material, preferably comprised between 0,45 and 0,55

– $\alpha$ the maximum fraction of pores volume which can be occupied by the gas without affecting the efficacity of the treatment; $\alpha$ fluctuating between 0,2 and 0,6

– S the cross section of the bed, in $m^2$

– h the height of the bed, in meter

– v the vertical component of the mean velocity

of the rising gas bubbles, comprised between 200 and 400 m/h

– $K_1$ a constant, comprised between 0,2 and 0,08 $m^3/m^3$, corresponding to the fraction of the volume of the bed occupied by immobilised gas pockets

– $K_2$ the oxygen concentration of the gas, preferably comprised between 0,20 and 1,40 $kg/m^3$

– $K_3$ the value of the oxygen demand (DO) which can satisfy 1 $m^3$ of granular material in an hour under the operating conditions (in $kg/m^3/h$), $K_3$ being lover than 0,8 kg of $O_2/h/m^3$ of granular material

– DO the demand in oxygen to be satisfied, in kg per $m^3$ of water to be treated and corresponding to the relation:

total DO = (0,7 to 1,2) $DBO_5$ + (4 to 5) N (from $NH_4$)

– R the global yield of transfer (or fraction: weight of effectively dissolved oxygen/weight of oxygen injected in the bed), R being a function of the saturation ($C_S$) and real (C) concentrations in oxygen in the bed, according to the relation:

R = K ($C_S$–C) where the constant K is between $2{,}7 \cdot 10^{-3}$ and $25 \cdot 10^{-3}$ in $(mg/l)^{-1}$ $m^{-1}$

2. Process in accordance with the claim 1 characterized in that the granular material is constituted by active carbon, the gas injection being made in the lower zone of the active carbon bed.

3. Process in accordance with the claim 1 characterized in that the granular material is constituted by a double bed including an upper part of active carbon grains and, in the lower part, a finer and denser material of a sandy type or similar.

4. Process in accordance with claim 3 characterized in that between the active carbon layer and the sand layer a material of intermediate density is intercalated, such as anthracite or similar.

5. Process in accordance with any of the claims 2 to 4, characterized in that the active carbon is replaced by a granular material chosen from the group of: baked clays (chamottes), chamottes doped with oligo-elements, raw clays, hydrated silicates, activated alumina.

6. Process in accordance with any of the claims 1 to 5 characterized in that the oxygenated gas is chosen from the group consisting of air, pure oxygen, a gaseous ozonized mixture derived from recycling the atmosphere, rich in ozone, overhanging water previously disinfected by ozone.

7. Process in accordance with claim 6 characterized in that the feeding of oxygenated gas which serves for injection in the bed of powdery material(s) is controlled and regulated by a probe measuring the dissolved oxygen arranged in the water to be treated.

8. Process in accordance with any of the claims 1 to 7 characterized in that the water to be purified is submitted preliminarily to an ozonizing treatment.

9. Application of the process in accordance with any of the claims 1 to 8 to the treatment of surface or sheet waters for the purpose of making them drinkable and to the treatment of waste waters such as from drains and industrial effluents.

**Patentansprüche**

1. Verfahren zur Reinigung von verseuchtem Wasser, bei dem man das zu behandelnde Wasser durch ein festes, eingetauchtes und aus körnigem Material bestehendes Bett fliessen lässt, wobei ein Sauerstoff enthaltender Gasstrom bei mittlerer Betthöhe eingeblasen wird und nach oben steigt, dadurch gekennzeichnet, dass man den Durchsatz des Wassers bzw. des Sauerstoffs enthaltenden Gases so einregelt, dass er folgenden Gleichungen entspricht:

$$\frac{Q_1}{S} \leq (\alpha\varepsilon - K_1)v \qquad (1)$$

$$\frac{Q_2}{S} \leq \frac{K_2R}{DO} \cdot v\,(\alpha\varepsilon - K_1) \qquad (3)$$

und gleichzeitig

$$\frac{Q_2DO}{Sh} \leq K_3 \text{ oder } \frac{Q_2}{S} \leq \frac{K_3h}{DO} \qquad (4)$$

worin:

– $Q_1$ den Durchsatz am Sauerstoff enthaltenden Gas in $m^3/h$

– $Q_2$ den unter 10 $m^3/h$ liegenden Durchsatz des zu behandelnden Wassers

– ε die vorzugsweise zwischen 0,45 und 0,55 liegende Porosität des Bettes

– α die maximale Volumenfraktion der Poren, die mit dem Gas gefüllt werden können, ohne den Wirkungsgrad der Behandlung zu beeinträchtigen; wobei α zwischen 0,2 und 0,6 liegt

– S den im $m^2$ gemessenen Querschnitt des Bettes

– h die in m gemessene Betthöhe

– v die zwischen 200 und 400 m/h liegende Senkrechtkomponente der Durchschnittsgeschwindigkeit der nach oben steigenden Gasblasen

– $K_1$ eine zwischen 0,02 und 0,08 $m^3/m^3$ liegende Konstante, die der Fraktion des Bettvolumens entspricht, das mit Gasblasen gefüllt ist

– $K_2$ die vorzugsweise zwischen 0,20 und 1,40 $kg/m^3$ liegende Sauerstoffkonzentration des Gases

– $K_3$ den Wert des Sauerstoffbedarfs (DO) von jeweils 1 $m^3$ körnigem Material in einer Stunde unter Verfahrensbedingungen (in $kg/m^3/h$), wobei $K_3$ unterhalb von 0,8 kg $O_2/h/m^3$ körnigem Material liegt

– DO den Sauerstoffbedarf (in kg gemessen) eines Kubikmeters des zu behandelnden Wassers entsprechend der Gleichung

Gesamt-DO = (0,7 bis 1,2) $DBO_5$ + (4 bis 5) N (aus $NH_4$)

– R pauschales Übergangsergebnis (bzw. Fraktion aus Gewicht des effektiv gemessenen Sauerstoffs geteilt durch Gewicht des in das Bett eingespritzten Sauerstoffs), wobei dieses Ergebnis einer Funktion der Sättigungskonzentration $C_S$ und

der reellen Konzentration C an Sauerstoff im Bett gemäss der Gleichung

$R = K\,(C_2 - C)$ worin $2{,}7 \cdot 10^{-3} \leq K \leq 25 \cdot 10^{-3}$ $(mg/l)^{-1}m^{-1}$

entspricht, darstellt.

2. Verfahren nach Anspruch 1, dadurch gekennzeichnet, dass das körnige Material in Form von Aktivkohle vorliegt, wobei die Einspritzung des Sauerstoff enthaltenden Gases in der unteren Zone des Aktivkohlebettes erfolgt.

3. Verfahren nach Anspruch 1, dadurch gekennzeichnet, dass das körnige Material in Form eines Doppelbettes vorliegt, wovon ein oberer Teil Aktivkohlegranulat enthält, während der untere Teil ein feineres, schwereres, sandähnliches Material oder dergleichen enthält.

4. Verfahren nach Anspruch 3, dadurch gekennzeichnet, dass zwischen der Aktivkohleschicht und der Sandschicht ein Material mittleren spezifischen Gewichts wie z.B. Anthrazit oder dergleichen angeordnet ist.

5. Verfahren nach einem der Ansprüche 2 bis 4, dadurch gekennzeichnet, dass statt Aktivkohle Schamotten, durch Spurenelemente dotierte Schamotten, ungebrannte Tonarten, wasserhaltige Silikate oder aktivierte Tonerden benutzt werden.

6. Verfahren nach einem der Ansprüche 1 bis 5, dadurch gekennzeichnet, dass das Sauerstoff enthaltende Gas als Luft, reiner Sauerstoff, oder ein aus dem Umlauf einer ozonreichen, oberhalb eines vorher mit Ozon desinfizierten Wassers vorhandenen Atmosphäre erhaltenes Gasgemisch vorliegt.

7. Verfahren nach Anspruch 6, dadurch gekennzeichnet, dass die Einfuhr des Sauerstoff enthaltenden Gases in das aus pulverförmigem Material bzw. pulverförmigen Materialien bestehende Bett durch eine Sonde geregelt wird, die in das zu behandelnde Wasser eingetaucht ist und auf die Konzentration des gelösten Sauerstoffs anspricht.

8. Verfahren nach einem der Ansprüche 1 bis 7, dadurch gekennzeichnet, dass das zu reinigende Wasser vorher ozonisierend behandelt wird.

9. Verwendung des Verfahrens nach einem der Ansprüche 1 bis 8 zur Behandlung von Oberflächenwasser oder Überflutungswasser, um solches Wasser trinkbar zu machen und zur Behandlung von Restwasser, wie z.B. abfliessendem Wasser oder Industrieabwasser.